# EUROPEAN PATENT APPLICATION

(11) **EP 4 002 808 A1**
(43) Date of publication of application: **25.05.2022**
(21) Application number: 21210247.9
(22) Date of filing: 24.11.2021
(51) Int. Cl.: H04L 61/5014

(54) **NETWORK TRUST WITH NON-PERMANENT DEVICE IDENTIFIERS**

(30) Priority: 24.11.2020 US 202063117764 P
(71) Applicant: Comcast Cable Communications LLC, Philadelphia, Pennsylvania 19103 (US)
(72) Inventor: LEE, Yiu Leung, Philadelphia, 19103 (US)
(74) Representative: V.O.

(57) **Abstract**

Methods and systems are described for managing communication in a network. A computing device may send a request to a network device for network address. The request may comprise a temporary device identifier associated with the computing device. The network device may send data indicating an option to trust the network device. If the computing device indicates acceptance of the option to trust the network device, additional information may be sent to the network device to allow identification of the computing device from one session to another.

## Description

### CROSS-REFERENCE TO RELATED APPLICATIONS

This application claims priority to and is a non-provisional of United States Provisional Patent Application No. 63/117,764, filed November 24, 2020, which is hereby incorporated by reference for any and all purposes.

### BACKGROUND

Currently many applications and networks use media access control (MAC) addresses as a device identity to perform many important functions, such as port-forwarding and persistent dynamic host control protocol (DHCP) assignments. Some companies concerned with user privacy have indicated that they might introduce features that allow users to provide randomized MAC addresses. These features, however, may cause important network functionality that relies on MAC addresses to become broken. Thus, there is a need for more sophisticated approaches to performing device identification.

### SUMMARY

Disclosed herein are methods and systems for enabling communication with a network. A network device, such as a gateway device, a DHCP server, or other address assignment server, may process requests for network addresses from various computing devices. The network device may be able to handle requests that use permanent identifiers (e.g., a MAC address, hardware identifier, network interface identifier) or non-permanent identifiers (e.g., a pseudo MAC address). A computing device, for example, may send a request to the network device using a temporary, randomized, self-generated, and/or otherwise non-traditional device identifier. The temporary identifier may be desirable in some scenarios to obtain a level of privacy from tracking of user behavior. This may be problematic for the network device if there are services for users that rely on persistent and/or permanent identification of a user. To alleviate this problem, the network device may identify itself (e.g., as part of a service entity) to any requesting devices, provide an option to trust the network device, and indicate any services available upon acceptance of the option to trust. Any computing devices accepting the option to trust the network device may send a message to the network device indicating acceptance of the option to trust. The computing device may store and later use the identity of the network device to trigger use of specific additional information associated with the identity. The additional information may include any information that can identify the computing device to the network device across multiple sessions, such as a device identifier (e.g., a permanent MAC address, a persistent MAC address), or certificate. The computing device may use different device identifiers with different networks and/or communications for non-trusted communications.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to limitations that solve any or all disadvantages noted in any part of this disclosure.

Additional advantages will be set forth in part in the description which follows or may be learned by practice. It is to be understood that both the foregoing general description and the following detailed description are exemplary and explanatory only and are not restrictive.

### BRIEF DESCRIPTION OF THE DRAWINGS

The accompanying drawings, which are incorporated in and constitute a part of this specification, illustrate embodiments and together with the description, serve to explain the principles of the methods and systems.
Figure 1 shows a block diagram of an example system.
Figure 2 shows a diagram of an example process.
Figure 3 shows a flowchart of an example method.
Figure 4 shows a flowchart of an example method.
Figure 5 shows a flowchart of an example method.
Figure 6 shows a flowchart of an example method.
Figure 7 shows a flowchart of an example method.
Figure 8 is a block diagram illustrating an example computing device.

### DETAILED DESCRIPTION OF ILLUSTRATIVE EMBODIMENTS

Disclosed herein is a novel approach for granting trust in a network to enable devices in the network to share persistent information for identification. Using the disclosed techniques, a client device may grant trust to a DHCP infrastructure, network, service entity (e.g., network service provider), and/or the like. A server in the network, such as a DHCP server, may send a digital certificate (e.g., or other cryptographic identifier) to identify the server to the client. The digital certificate may comprise an address, a network name, and/or other information that is signed using a cryptographic key. The server may send an option (e.g., a DHCP server option) to trust the server (e.g., or the associated network, service entity). The client device may store and use a temporary device identifier, such as a pseudo MAC address, or trusted digital certificate. The client device may send a client option (e.g., DHCP client option) indicating trust of the network. The client device may send a temporary device identifier and a time interval in which the client device will continue using the same device identifier to communicate with the network.

The client device may use the device identifier at any access point (e.g., including multiple different access point) associated with the trusted network. At each access point, if the same digital certificate is received, the client device may indicate the corresponding device identifier. The client device's default behavior for connecting to a network may be to use a new temporary device identifier (e.g., a randomized MAC-Address sent in a DHCP message) if sending a request for a network address. If the client device receives the digital certificate in a message (e.g., DHCP offer) offering a network address, the client device may determine that the digital certificate is associated with a trusted network. The client device may ignore the message and offered network address and send a new message requesting a network address using a temporary device identifier already associated with the trusted network. The temporary device identifier may be the last used device identifier for communicating with the network. The temporary device identifier may be a hardware address (e.g., network interface address, pseudo MAC address), a digital certificate, a token, or other identifying information to identify the client device across multiple communication sessions.

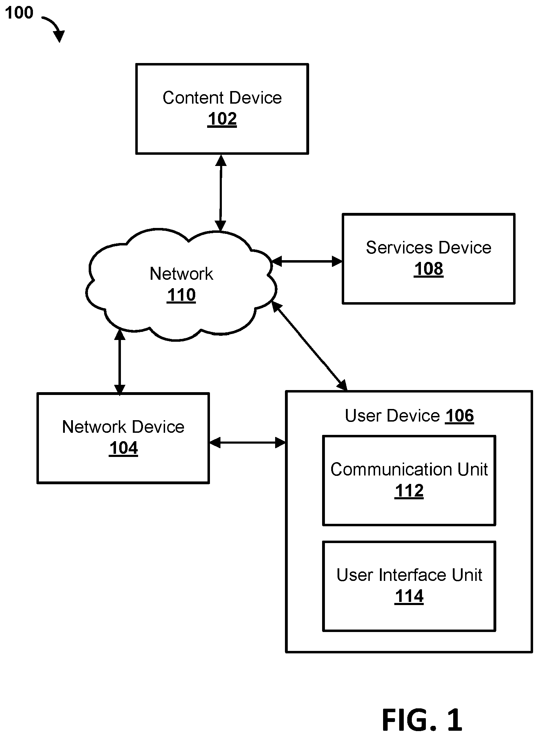

FIG. 1 is a block diagram showing an example system 100 for network communication. The system 100 may comprise a content device 102, a network device 104, a user device 106, a services device 108, or a combination thereof. The content device 102, the network device 104, the user device 106, and/or the services device 108 may be communicatively coupled via a network 110 (e.g., a local area network, a wide area network, or a combination thereof).

The network 110 may comprise a content distribution and/or access network. The network 110 may facilitate communication via one or more communication protocols. The network 110 may comprise fiber, cable, a combination thereof. The network 110 may comprise wired links, wireless links, a combination thereof, and/or the like. The network 110 may comprise routers, switches, nodes, gateways, servers, modems, and/or the like.

The content device 102 may be configured to send content to a plurality of users. The content may comprise video data, audio data, gaming data, closed caption (CC) data, a combination thereof, and/or the like. The content may comprise a plurality of content channels, such as live channels, streaming channels, cable channels, and/or the like. The content device 102 may comprise one or more servers. The content device 102 may be one or more edge devices of a content distribution network and/or content access network. The content device 102 may comprise a transcoder configured to encode, encrypt, compress, and/or the like the content. The content device 102 may comprise a packager configured to package the content, segment the content, and/or the like. The content device 102 may be configured to manage recorded content (e.g., schedule recordings, access recordings, etc). The content device 102 may send the content as a plurality of packets, such as transport stream packets, Moving Picture Experts Group (MPEG) transport stream packets, and/or the like.

The user device 106 may be configured to receive the content from the content device 102. The user device 106 may comprise a computing device, smart device (e.g., smart glasses, smart watch, smart phone), a mobile device, a tablet, a computing station, a laptop, a digital streaming device, a set-top box, a streaming stick, a television, and/or the like.

The user device 106 may be configured to receive the content via a communication unit 112. The communication unit 12 may comprise a modem, network interface, and/or the like configured for communication via the network 110. The communication unit 112 may be configured to communicatively couple (e.g., via a local area network, a wireless network) the user device 106 to the network device 104, the content device 102, the services device 108, or a combination thereof. In some scenarios, the user device 106 may be configured to access the network 110 via the network device 104. In other scenarios, the user device 106 may be configured to access the network 110 (e.g., and the network device 104) through a different device (e.g., not shown).

The user device 106 may comprise a user interface unit 114. The user interface unit 114 may comprise an application, service, and/or the like, such as a content browser. The user interface unit 114 may be configured to cause display of a user interface. The user interface unit 114 may receive user interface data from the services device 108. The user interface data may be processed by the user interface unit 114 to cause display of the user interface. The user interface may be displayed on a display of the user device 106. The display may comprise a television, screen, monitor, projector, and/or the like.

The network device 104 may be configured to associate (e.g., assign) network addresses with corresponding computing devices. The network device 104 may comprise a computing device, a gateway device, a router, a network access device, a server device, a DHCP server, and/or the like. The network device 104 may be configured to receive a request from the user device 106 for a network address to communicate with a network (e.g., a local area network, at least a portion of the network 110). The request may comprise a Dynamic Host Configuration Protocol request. The request may comprise a request for an internet protocol address. The request may be broadcast by the user device 106 to at least a portion of the network 110. The request may be received with (e.g., or comprise) a device identifier associated with the user device 106.

The network device 104 may be configured to associate (e.g., based on, in response to the request) a network address with the user device 106. The network address may comprise at least one of an internet protocol (IP) address, an IP version 4 address, or an IP version 6 address. The network device 104 may select the network address from a pool of network addresses managed by the network device 104. The user device 106 may be associated with the network address by associating the device identifier with the network address.

The device identifier may not be a user identifier (e.g., a username, a user token, a key), such as a user identifier used by an application (e.g., an application layer identifier), and/or the like. The device identifier may be a physical layer identifier, a network layer identifier, a network interface identifier, a hardware interface identifier, an operating system interface identifier, a device interface identifier, an Ethernet address, an Ethernet hardware address, or a combination thereof. The device identifier may be identified as (e.g., in a specific field, formatted as) a hardware identifier, a permanent identifier, a media access control identifier, a physical layer identifier, a network layer identifier, a network interface identifier, a hardware interface identifier, an operating system interface identifier, an Ethernet address, an Ethernet hardware address, and/or the like. The device identifier may comprise (e.g., and in some scenarios may be identified as) a temporary identifier (e.g., an identifier associated with a limited time window of use), a randomized identifier, a generated identifier (e.g., generated by the user device 106), and/or the like. The device identifier may be a persistent identifier (e.g., persistent for a specific network from one session to another). The device identifier may be generated by the user device 106. The user device 106 may be configured to associate (e.g., and determine, generate) different device identifiers with different identity information corresponding to one or more different networks, service entities, or network devices different networks.

The device identifier may be associated with (e.g., by the network device 104) specific router settings. Different services may have corresponding router settings. A network may offer a first class of service (e.g., an employee private network, a manager private network) with specific router settings allowing access to specific network services and/or resources. A second class of service (e.g., a guest network, a student network, a staff network) may be associated with different router settings (e.g., different available resources) than the first class of service. A computing device may become associated with a specific class of service based on authentication using user credentials and/or based on using a specific device identifier. If a user authenticates for a specific service, then the device identifier used at the time of authentication may be associated with and/or granted access to the service. If the user (e.g., or computing device) changes the device identifier, the user may have to re-authenticate to access the service.

The device identifier may comprise a device identifier for (e.g., or associated with) communication with an untrusted network. If the user device 106 is sending a request to an unknown device, unknown network, untrusted device, untrusted network, a combination thereof, and/or the like, the user device 106 may generate the device identifier specifically for the request (e.g., or more generally for communication with the network, service, service provider). The device identifier may comprise and/or be identified as a media access control address (e.g., a temporary MAC address).

The user device 106 may comprise a data store (e.g., a database, a table) comprising a plurality of device identifiers. The device identifiers may have an associated duration, expiration time, and/or the like. The device identifiers may be associated with identity information for a corresponding network, service entity, network device, and/or the like. The data store may associate a particular device identifier and/or identity information with a corresponding policy. The policy may be specific to the particular device identifier and/or network. The policy may be based on user input. The policy may comprise a time duration (e.g., or expiration time) for the association. The policy may comprise one or more services to enable for the network. The computing device may use the device identifier corresponding to a specific network to communicate with the network.

The network device 104 may be configured to send to the user device 106 a message indicating the network address associated with the user device 106. The network device 104 may be configured to send to the user device 106 identity information (e.g., in a message with the network address, in a separate message from the network address). The identity information may comprise a digital certificate (e.g., or cryptographic identifier) associated with one or more of the network, a network service associated with the network, a service entity associated with the network, or a combination thereof. The identity information may be signed based on a public/private key process. The identity information may be verified by a certificate authority (e.g., using a root certificate, by communicating with the certificate authority).

The network device 104 may be configured to send (e.g., with the network address, separately from the network address) to the user device 106 data indicating an option to trust the network (e.g., or trust parameter). The option to trust the network may comprise a configuration option associated with the network device 104. The data indicating the option may comprise an option code number, an option code name, a combination thereof, and/or the like. The data indicating the option to trust may comprise a DHCP option, a DHCP server option, and/or the like.

The network device 104 may be configured to send (e.g., with the network address, separately from the network address) to the user device 106 data indicating one or more services available to the user device 106. The one or more services may be available to the user device 106 if (e.g., only if) the option to trust is accepted. The one or more services may comprise at least one of a quality of service enforcement service, a parental control service, a content filtering service, a corporate network service, a private network service, a guest network service, a gaming service, or a combination thereof. The one or more services may be associated with the services device 108. The services device 108 may allow users to manage (e.g., if authenticated) the one or more services. The services device 108 may be configured to allow users to associate rules with one or more services, such as rules for blocking content, rules for permitting content, restrictions on time for accessing services, restrictions on duration for accessing services, and/or the like. The services device 108 may be configured to allow the user to associate one or more device identifiers with corresponding services, rules, and/or the like. The services device 108 and/or the network device 104 may be configured to facilitate access and/or deny access according to the specified rules, device identifiers, and/or the like. The network device 104 may be configured receive the rules, device identifiers, a list of services, and/or the like from the services device 108.

The user device 106 may be configured to send data indicating acceptance of the option to trust the network. The user device 106 may cause output (e.g., via the user interface) of a prompt requesting the use to indicate whether to trust the information or not. The user interface may output a representation of the one or more services associated with accepting the option to trust the network. The user interface may cause output of data associated with the identity information (e.g., a name associated with the service entity that manages the network). The user interface may allow the user to define one or more policies associated with acceptance of the option to trust. An example policy may specify which services of the one or more services are enabled. An example policy may specify a duration of the acceptance of the trust, a duration of using a device identifier for communication with the network device 104, and/or the like.

The user device 106 may send additional information to the network device 104. The additional information may comprise additional information for identifying the user device 106 in communications associated with the trust of the network. The additional information may comprise one or more of an additional device identifier, a device identifier associated with an expiration time, a trust certificate, or a permanent device identifier. The additional information may comprise a permanent (e.g., manufacturer defined) media access control address. The additional information may comprise a temporary media access control address. The temporary media access control may comprise a persistent (e.g., semi-persistent, for communication across multiple communication sessions) media access control address (e.g., or other device identifier) associated with the network (e.g., or service entity, network device 104).

The additional information may comprise policy information, such as an indication of timing information. The timing information may comprise a length of time, duration, expiration time and/or the like associated with a device identifier used by the user device. The device identifier may comprise the identifying information indicated in the additional information (e.g., or the original device identifier). The user device 106 may give notice to the network device 104 of a time for which the device identifier is valid. Upon expiration of the time for which the device identifier is valid, the user device 106 may send a message to the network device 104 indicating that the user device 106 is change to a new device identifier. The user device 106 may then reconnect to the network device 104 using the new device identifier. The network device 104 may continue to offer the services without interruptions and/or requirement of renewal of the option to trust.

The timing information (e.g., or policy information) sent to the network device 104 may be based on the one or more services offered by the network device 104 (e.g., sent with the option to trust). As an example, the services offered may comprise a tv service and a parental control service. A user that only needs the tv service for two hours (e.g., to watch a game or movie), may indicate a two hour time window for using a device identifier (e.g., or accepting the offer to trust). A user that needs the parental control service may indicate a longer time window, such as one year, or an indefinite time period. If the services offered by the network device 104 changes over time, the user may be given an opportunity to update the time associated with the device identifier. The services offered may be based on a user subscription, tier, or other user information (e.g., that may change from time to time). For example, if a user signs up for a new service, such as a virtual private network service, the new service may be added to the services offered by the network device 104 to the user device 104. The network device 104 may be associated with a user account (e.g., if it is located at the premises of the user).

As another example, a user may enter a premises of a business. The business may offer network access at the premises of the business. If the user device 106 attempts to connect to a network device 104 at the business premises, the network device 104 may indicate available business related network services, such as limited access to the business website. A customer may choose to trust the network device 104 for a shorter time, such as an hour. The services may be enhanced for employees, which may choose to use a longer time window for a device identifier, such as a one month time window. It should be noted that multiple network devices 104 may be used to facilitate network access for a service provider (e.g., such as the business). The service provider may configure the network such that all (e.g., or a portion) of the network devices 104 are able to recognize the device identifier of the user and any associated information, such as an indication of acceptance of the offer to trust, policy information, timing information, and/or the like. Each of the network devices 104 may store this information locally (e.g., and this information may be populated to other network devices 104), may access another network device and/or server storing the information for a plurality of users, or a combination thereof.

The one or more services (e.g., indicated in the second message) may be facilitated by the network device 104 (e.g., and/or by other network devices) based on the additional information. The one or more services may be facilitated by the network device 104 based on the data indicating the acceptance of the option to trust. Facilitating the one or more services may comprise processing, based on rules corresponding to the one or more services, communications associated with the user device. If the network device 104 (e.g., or other network device in the network) receives a data packet, the network device 104 may inspect the packet to determine a device identifier (e.g., MAC address). The network device 104 may determine if any services are associated with the device identifier. The network device 104 may send a query to the services device 108 to determine if any services are associated with the device identifier. The services device 108 may determine an account associated with the device identifier. The user associated with the account may have entered the device identifier as a device identifier associated with the one or more services. The services device 108 may send any parameters, configuration information, and/or the like associated with enforcement of the one or more services to the network device 104. The services device 108 may process the data packet based on the parameters, configuration information, and/or the like.

An example service may comprise a parental control service. The parental control service may allow users to associate a content maturity level with a corresponding user profile, device identifier, and/or the like. The network device 104 may receive a DHCP discover request from the user device 106 requesting a network address. The network device 104 may determine that the request comprises a MAC address that is not recognized (e.g., no record of prior communication with the device identifier). The MAC address may be a randomized MAC address generated by the user device 106. The network device 104 may send an assigned IP address to the user device 106. The IP address may be sent in a DHCP offer with a trust option. The user device 106 may detect the trust option, and may respond with an additional DHCP discover message indicating an additional MAC address. The additional MAC address may be one stored in the user device that is associated with a particular network (e.g., or service entity). The user device 106 may use identity information from the network device 104 to search for the additional MAC address. If one is found, it may be sent in the additional DHCP discover message. The DHCP discover message may comprise an acceptance of the trust option. The network device 104 may send an additional DHCP offer message with a new network address based on the additional discover message.

The user device 106 may send another message using the network address to request access to a content item (e.g., show, movie) from the content device 102. In some scenarios, the request to access the content item may be sent (e.g., by the user device 106) to another network device different than the network device 104. The request may comprise the additional MAC address. The network device 104 (e.g., or the other network device) may validate that the request satisfies any rules, such as maturity level rules associated with the device identifier. If the request is validated, then the request may be sent to the content device 102. If the request is not validated, the request may be ignored, and the user device 106 may be redirected to another content page, and/or the like. If the user device 106 attempts to communicate with the network device 104 (e.g., or the other network device) using yet another MAC address that is unrecognized, the network device 104 may grant access to the network but block any requests for content to the content device 102 that have a maturity rating above a threshold content maturity level.

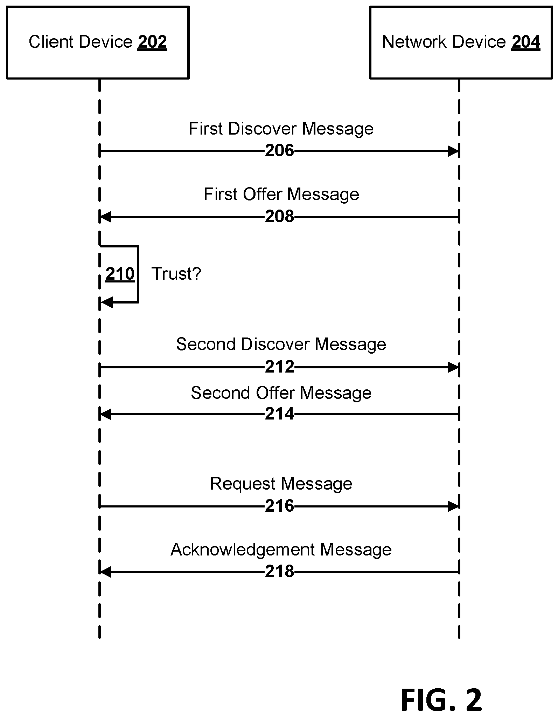

FIG. 2 shows a diagram of an example process. The process may comprise a client device 202 and a network device 204. The network device 204 may comprise a computing device, a server, an address assignment service, a network addressing server, a Dynamic Host Configuration Protocol (DHCP) server, and/or the like. The client device 202 may comprise a computing device, smart device (e.g., smart glasses, smart watch, smart phone), a mobile device, a tablet, a computing station, a laptop, a digital streaming device, a set-top box, a streaming stick, a television, and/or the like. The network device 204 may be a device associated with accessing a network for a network service entity (e.g., internet service provider).

At 206, a first discover message may be sent from the client device 202 to the network device 204. The first discover message may comprise a request for a network address assignment. The first discover message may be broadcast via a network. The first discover message may comprise a DHCP discover message (e.g., for DHCPv4), a DHCP solicit message (e.g., for DHCPv6). The first discover message may comprise a temporary device identifier. The temporary device identifier may be generated (e.g., via software process, emulated, randomly determined) by the client device 202. The temporary device identifier may comprise a media access control device identifier. The temporary device identifier may be different than a permanent device identifier assigned by a manufacturer (e.g., a MAC address of a network interface of the client device 202).

At 208, a first offer message may be sent from the network device 204 to the client device 202. The first offer message may be in response to the first discover message. The network device 204 may assign a network address (e.g., internet protocol address) to the client device 202. The network device 204 may associate the network address with the temporary device identifier. The first offer message may comprise data indicating the network address (e.g., the assignment of the network address). The data may indicate that the network address is associated with the temporary device identifier.

The first offer message may comprise data indicative of one or more server options. The one or more server options may comprise data indicating an option to trust the network (e.g., or the network device 204). A data value of "TRUST_NETWORK_OPTION" or any other value may be used to identify the trust option. The first offer message may comprise a digital certificate. The digital certificate may be associated with (e.g., in a data field of) the server option (e.g., the trust option). The digital certificate may comprise a network address (e.g., internet protocol address) of the network device 204. The digital certificate may comprise a service provider identity (e.g., a network service provider identity). The digital certificate may comprise both the DHCP server IP and ISP identity (e.g., in terms of fully qualified domain name (FQDN), such as www.xfinity.com).

The first offer message may comprise data indicating one or more services (e.g., a list of services) offered to the client device 202. Access to the one or more services may be conditioned upon the client device 202 accept the trust option. The trust option may be offered in exchange for using a pseudo-static device identifier, such as a temporary device identifier that endures for a set time and is persistently used from one communication session to another during the set time.

At 210, the client device 202 may determine whether to accept the trust option or not (e.g., or whether to trust the network device 204 and/or associated network or not). The client device 202 may access a trusted services data store (e.g., mapping, table) to determine if the network device 204 (e.g., or associated network, service provider) is already trusted. If the network device(e.g., or associated network, service provider) is in the trusted services data store, the client device 202 may determine (e.g., based on the entry in the data store) to continue to trust the service device. If the service identity is not in the trusted service data store, the client device 202 may determine whether to trust the network device 204 or not.

A user of the client device 202 may be prompted (e.g., via a display, notification, etc. of the client device 202) on whether to trust the network device 204 (e.g., or service, network, service provider). In some scenarios, a different user may be prompted on whether to trust the network, such as an admin, primary user (e.g., a parent) of an account, and/or the like. In this scenario, a server may be used to identify the different user and send a message to a device of the user account. The server may send a response of the different user to the network device 204. If the user approves trusting the network device 204, then the option to trust may be accepted. The one or more services may be output with a request to a user via a user interface (e.g., shown on a display) of the client device 202. The user may interact with the user interface to indicate whether to trust the network device 204 or not. The client device 202 may determine to trust the network device 204 based on one or more trust rules. A trust rule may specify a service that is associated with trust. If the service indicated in the trust rule matches the one or more services of the network device 204, the client device 202 may determine (e.g., based on the trust rule) to accept the trust option. A trust rule may specify a service that is not trusted. If the service of the trust rule matches the one or more services of the network device 204, the client device 202 may determine (e.g., based on the trust rule) to not accept the trust option. The trust rules may be weighted to allow prioritization of rules in circumstances in which rules conflict. A trust rule may be defined by a user of the computing device 202, a user of account associated with a network service (e.g., e.g., primary user may define behavior for devices of secondary users), or a combination thereof. A trust rule may be sent to the computing device 202 by a service entity (e.g., via an application on the computing device 202), if a user enables a service indicated in the one or more services.

If the client device 202 accepts the trust option, the client device 202 may store an association of the temporary device identifier (e.g., or a newly generated temporary device identifier, or a previously used temporary device identifier associated with the network) with data associated with network device 204 (e.g., or a service provider and/or network associated with the network device 204). The data associated with the network device 204 may comprise the digital certificate received from the network device 204. The client device 202 may add an entry to a data store, such as a table (e.g., and in some cases create the table itself), that includes the digital certificate and the temporary device identifier.

If the client device 202 accepts the trust option, the process may proceed to step 212. If the client device 202 does not accept the trust option, client device 202 may proceed to communicate with the network using the assigned network address. A user may be prompted on whether to trust the network, not trust the network, take no action, and/or the like. If the user indicates not to trust the network, an entry may be added to the data store identifying the digital certificate as being associated with an untrusted network.

At step 212, the client device 202 may send a second discover message 212 (e.g., DHCP discover, DHCP solicit) to the network device 204. The second discover message may comprise data indicating that the client device 202 has accepted the trust option. The second discover message may comprise a grant trust option. The grant trust option may be included in a client option field (e.g., DHCP Client Option field). A data value of "GRANT TRUST NETWORK OPTION" or any other similar value may indicate that trust option is accepted. The second discover message may comprise a temporary device identifier (e.g., the earlier used device identifier, or a newly generated device identifier). The temporary device identifier may be stored in a field of (e.g., or associated with) the trust option. The temporary device identifier may be the identifier the client device 202 will use (e.g., at least for a time period) to communicate with the network device 204 (e.g., or service provider, network). The temporary device identifier may comprise (e.g., or be formatted, identified as) a MAC address.

The second discover message may comprise timing information associated with the grant trust option. The timing information may comprise an expiration time. The expiration time may comprise a time duration that the trust is granted, a time duration that the client device will use the temporary device identifier for communication service provider, a time the client device 202 plans to change the temporary device identifier to a new temporary device identifier (e.g., for communicating with the network service), or a combination thereof. The client device 202 may continue to use the temporary device identifier for communications with the network service if the time for any communications occurs before the expiration time. For subsequent communications with network devices of a trusted network, the client device 202 may receive a digital certificate in establishing communication and determine (e.g., by accessing the data store) a corresponding temporary device identifier to use for communication with the network.

Before the trust of a network expires, the client device 202 may send a message to renew the network device (e.g., a DHCP REQUEST message to renew the IP address). The request message may comprise the grant trust option (e.g., GRANT_TRUST_NETWORK_OPTION). The grant trust option may comprise the device identifier (e.g., MAC address) the client device 202 will use for this server and the time the client device 202 will change the device identifier. At 214, a request message may be sent from the client device 202 to the network device 204. The request message may comprise a message to renew the network address assigned to the client device. The request message may be sent at a time before the expiration time. The request message may comprise a DHCP request message. The request message may comprise an indication of the grant trust option. The request message may comprise a device identifier the client address will use to communicate with the server device (e.g., or service, network, service provider). The device identifier may comprise the last (e.g., most recent) device identifier that the client device 202 used to communicate with the network device 204 (e.g., or service, network, service provider). The request message may comprise timing information associated with the device identifier, such as an expiration time indicating when the device identifier will no longer be used.

At 216, an acknowledgement message may be sent from the network device 204 to the client device 202. The acknowledgment message may comprise a new network address, such as a new internet protocol address.

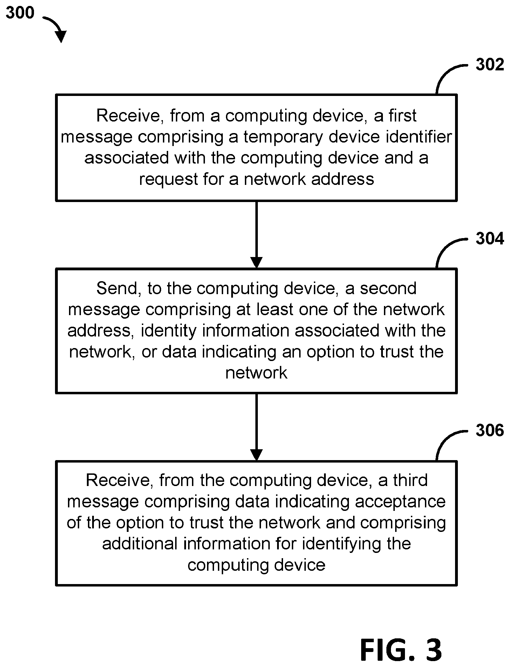

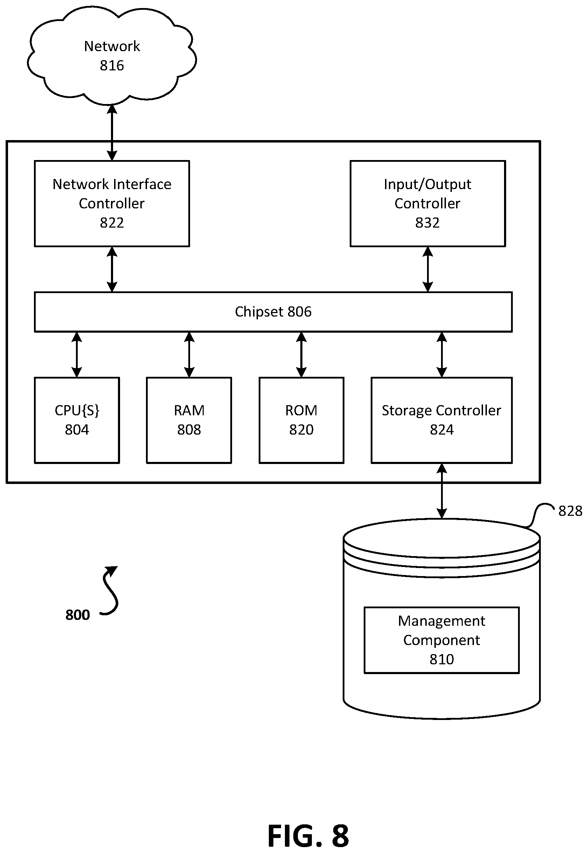

FIG. 3 shows a flowchart of an example method. The method 300 may comprise a computer implemented method for providing a service (e.g., a communication service, network service). A system and/or computing environment, such as the system 100 of FIG. 1, the devices of FIG. 2 (e.g., the client device 202, the network device 204), or the computing environment of FIG. 8, may be configured to perform the method 300.

At step 302, a first message may be received. The first message may be received from a computing device. The first message may comprise a request for a network address (e.g., a request to be assigned and/or associated with any network address available) to communicate with a network. The request may comprise a Dynamic Host Configuration Protocol request. The network address may comprise at least one of an internet protocol address, an internet protocol version 4 address, or an internet protocol version 6 address.

The first message may comprise a temporary device identifier associated with the computing device. The temporary device identifier may be a randomized device identifier, a device identifier generated by the computing device, a device identifier specific to (e.g., assigned to, associated with) the network, a device identifier for communication with an untrusted network, or a combination thereof. The temporary device identifier may comprise a media access control address (e.g., a temporary MAC address). The computing device may be configured to associate different device identifiers with different identity information corresponding to one or more different networks, service entities, or network devices.

At step 304, a second message may be sent. The second message may be sent to the computing device. The second message may be sent by the network device. The second message may be sent based on (e.g., in response to) the request. The second message may comprise the network address. The network device may associate (e.g., or assign) the network address and the temporary device identifier. The network address may be selected from a pool of network addresses.

The second message may comprise identity information associated with the network. The identity information may comprise a digital certificate (e.g., or other cryptographic identifier) associated with one or more of the network, a network service associated with the network, a service entity associated with the network, or a combination thereof. The identity information may be signed based on a public/private key process. The identity information may be verified a certificate authority (e.g., using a root certificate, by communicating with the certificate authority).

The second message may comprise data indicating an option to trust the network (e.g., or trust parameter). The option to trust the network may comprise a configuration option associated with the network device. The data indicating the option may comprise an option code number, an option code name, a combination thereof, and/or the like. The data indicating the option to trust may comprise a DHCP option, a DHCP client option, and/or the like.

The second message may comprise data indicating one or more services available to the computing device if the option to trust may be accepted. The one or more services may comprise at least one of a quality of service enforcement service, a parental control service, a content filtering service, a network diagnosis service (e.g., connectivity diagnosis service), a network resource service (e.g., a sticky or static IP address assignment service), network identifier (e.g., MAC address) based filter, a network protection service (e.g., security service, denial-of-service protection service, a MAC address based dynamic denial-of-service protection), a band steering service (e.g., a MAC address based Wi-Fi band steering service), network roaming services (e.g., MAC address based Wi-Fi roaming between Wi-Fi access points), a corporate network service, a private network service, a virtual private network service, a network tunneling service, a guest network service, a gaming service, or a combination thereof.

The computing device may comprise a data store (e.g., a database, a table) comprise entries associating device identifiers with identity information for the corresponding network. The data store may associate a particular device identifier and/or identity information with a corresponding policy. The policy may be specific to the particular device identifier and/or network. The policy may be based on user input. The policy may comprise a time duration (e.g., or expiration time) for the association. The policy may comprise one or more services to enable for the network. The computing device may use the device identifier corresponding to a specific network to communicate with the network.

At step 306, a third message may be received. The third message may be received from the computing device. The third message may be received by the network device. The third message may be received based on (e.g., in response to) the second message. The third message may comprise data indicating acceptance of the option to trust the network. The third message may comprise additional information. The additional information may comprise additional information for identifying the computing device in communications associated with the trust of the network. The additional information may comprise one or more of an additional device identifier, a device identifier associated with an expiration time, a trust certificate, or a permanent device identifier. The additional information may comprise a randomized device identifier, a device identifier generated by the computing device, a device identifier associated specifically (e.g., or only) with the network (e.g., not associated with other networks), a device identifier for communication with a trusted network (e.g., the network), a device identifier for trusted communications with the network, or a combination thereof.

The one or more services (e.g., indicated in the second message) may be facilitated by the network device. The one or more services may be facilitated based on the data indicating the acceptance of the option to trust. Facilitating the one or more services may comprise processing, based on rules corresponding to the one or more services, communications associated with the computing device.

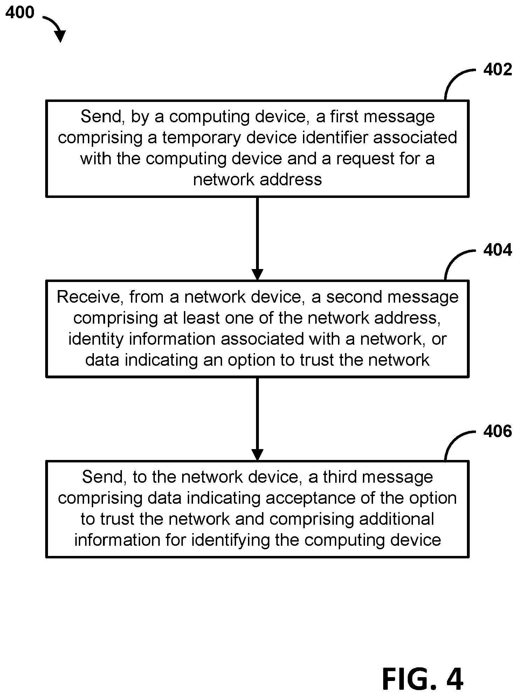

FIG. 4 shows a flowchart of an example method. The method 400 may comprise a computer implemented method for providing a service (e.g., a communication service, network service). A system and/or computing environment, such as the system 100 of FIG. 1, the devices of FIG. 2 (e.g., the client device 202, the network device 204), or the computing environment of FIG. 8, may be configured to perform the method 400.

At step 402, a first message may be sent. The first message may be sent by a computing device. The first message may be sent to a network device. The first message may comprise a request for a network address to communicate with a network may be sent. The request may comprise a DCHP discover request.

The first message may comprise a temporary device identifier associated with the computing device. The temporary device identifier may be a randomized device identifier, a device identifier generated by the computing device, a device identifier specific to (e.g., assigned to, associated with) the network, a device identifier for communication with an untrusted network, or a combination thereof. An association of the temporary device identifier with the network may be stored.

At step 404, a second message may be received. The second message may be received from the network device. The second message may be received by the computing device. The second message may be received based on the request. The second message may comprise the network address. The network address may comprise at least one of an internet protocol address, an internet protocol version 4 address, or an internet protocol version 6 address.

The second message may comprise identity information associated with the network. The identity information may comprise a digital certificate (e.g., or other cryptographic identifier) associated with at least one of the network, a network service associated with the network, or a service entity associated with the network. The identity information may be signed based on a public/private key process. The identity information may be verified a certificate authority (e.g., using a root certificate, by communicating with the certificate authority).

The second message may comprise data indicating an option to trust the network. The option to trust the network may comprise a configuration option associated with the network device. The data indicating the option may comprise an option code number, an option code name, a combination thereof, and/or the like. The data indicating the option to trust may comprise a DHCP option, a DHCP client option, and/or the like.

The second message may comprise data indicating one or more services available to the computing device if the option to trust is accepted. The one or more services may comprise at least one of a quality of service enforcement service, a parental control service, a content filtering service, a corporate network service, a private network service, a guest network service, a gaming service or a combination thereof.

At step 406, a third message may be sent. The third message may be sent based on the second message. The third message may be sent by the computing device. The third message may be sent to the network device. The third message may comprise data indicating acceptance of the option to trust the network. The data indicating acceptance of the option to trust the network may comprise a DHCP client option.

The third message may comprise additional information for identifying the computing device in communications associated with the trust of the network. The additional information may comprise one or more of an additional device identifier, a device identifier associated with an expiration time, a trust certificate, or a permanent device identifier. The additional information may comprise a randomized device identifier, a device identifier generated by the computing device, a device identifier associated specifically (e.g., or only) with the network (e.g., not associated with other networks), a device identifier for communication with a trusted network (e.g., the network), a device identifier for trusted communications with the network, or a combination thereof.

An association between the identity information and the additional information may be determined. The association may be determined based on a data store (e.g., table) of the computing device. The additional information may be added to the third message based on determining the association. The data store may comprise entries associating device identifiers with identity information for corresponding networks. The data store may associate a particular device identifier and/or identity information with a corresponding policy. The policy may be specific to the particular device identifier and/or network. The policy may be based on user input. The policy may comprise a time duration (e.g., or expiration time) for the association. The policy may comprise one or more services to enable for the network. The computing device may use the device identifier (e.g., from the data store) corresponding to a specific network to communicate with the network.

The computing device may be configured to store associations of different networks with different identity information corresponding to one or more different networks, service entities, or network devices. The associations may be managed, generated, and/or accessed by a component (e.g., sub-component, element, function, unit) of an operating system of the computing device. The component may be a function integrated into the operating system (e.g., requiring configuring / enabling of the component via an operating system menu / command interface). The component may be a network component associated with one or more network interfaces of the computing device. The association between the identity information and the additional information may be determined by the operating system (e.g., the component of the operating system). A determination may be made that the identity information is not stored by the computing device. The temporary device identifier may comprise a media access control address. The request may comprise a Dynamic Host Configuration Protocol request. The additional information may be generated based on determining that the identity information is not stored by the computing device.

The network device may be configured to facilitate the one or more services. The one or more services may be facilitated based on the data indicating the acceptance of the option to trust. Facilitating the one or more services may comprise processing, based on rules corresponding to the one or more services, communications associated with the computing device.

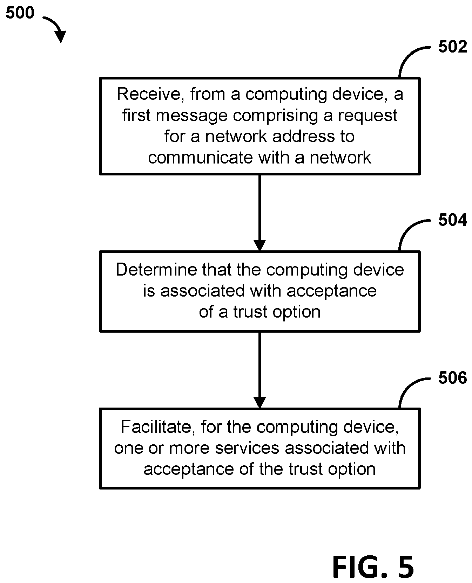

FIG. 5 shows a flowchart of an example method. The method 500 may comprise a computer implemented method for providing a service (e.g., a communication service, network service). A system and/or computing environment, such as the system 100 of FIG. 1, the devices of FIG. 2 (e.g., the client device 202, the network device 204), or the computing environment of FIG. 8, may be configured to perform the method 500.

At step 502, a first message may be received. The first message may be received from a computing device. The first message may be received by a network device. The first message may comprise a temporary device identifier associated with the computing device. The first message may comprise a request for a network address to communicate with a network.

The temporary device identifier may be a randomized device identifier, a device identifier generated by the computing device, a device identifier specific to (e.g., assigned to, associated with) the network, a device identifier for communication with an untrusted network, or a combination thereof. The computing device may be configured to associate different device identifiers with different networks. The temporary device identifier may comprise a media access control address. The request may comprise a Dynamic Host Configuration Protocol request (e.g., DHCP discover request).

At step 504, a determination may be made that a trust option for trusting the network has been accepted. The determination may be made by the network device. The determination may be made based on determining that one or more of the temporary device identifier or additional information received from the computing device is associated with acceptance of a trust option for trusting the network. Determining that the trust option has been accepted (e.g., or determining that one or more of the temporary device identifier or additional information received from the computing device may be associated with acceptance of a trust option for trusting the network) may comprise at least one of: determining that a message from the computing device indicates acceptance of the trust option, determining that the temporary device identifier was previously associated with the trust option, or determining that an expiration time associated with the trust option has not passed.

The temporary device identifier may be associated with acceptance of the trust option (e.g., in a data store of the network device). If the temporary device identifier is determined to be associated with acceptance of the trust, it may be determined that the trust option is accepted. If the temporary device identifier is unknown to the network device, the network device may determine to send a message indicating the option to trust the network.

A second message comprising a network address associated with the temporary device identifier may be sent to the computing device. The network address may comprise at least one of an internet protocol address, an internet protocol version 4 address, or an internet protocol version 6 address. The second message may be sent based on the request. If the temporary device identifier is unknown to the network device, the second message may comprise data indicating an option to trust the network, identity information associated with the network, or a combination thereof. The identity information may comprise a digital certificate (e.g., or other cryptographic identifier) identifying at least one of the network, a network service associated with the network, or a service entity associated with the network. The second message may comprise data indicating that the one or more services are available to the computing device if the option to trust may be accepted.

Additional information may be received from the computing device (e.g., in response to the second message). The additional information received from the computing device may be associated with acceptance of a trust option for trusting the network. The additional information may comprise data indicating acceptance of the trust option. The additional information may comprise one or more of an additional device identifier, a device identifier associated with an expiration time, a trust certificate, or a permanent device identifier. The network device may associate a new network address with the additional information (e.g., the additional device identifier, permanent device identifier). The network device may send the new network address to the computing device. The additional information may comprise a randomized device identifier, a device identifier generated by the computing device, a device identifier associated specifically (e.g., or only) with the network (e.g., not associated with other networks), a device identifier for communication with a trusted network (e.g., the network), a device identifier for trusted communications with the network, or a combination thereof.

At step 506, one or more services associated with acceptance of the trust option may be facilitated. The one or more services may be facilitated by the network device, another network device, a server, or a combination thereof. The one or more services associated with acceptance of the trust option may be facilitated for the computing device. The one or more services may comprise at least one of a quality of service enforcement service, a parental control service, a content filtering service, a corporate network service, a private network service, a guest network service, a gaming service, or a combination thereof. Facilitating the one or more services may comprise processing, based on rules corresponding to the one or more services, communications associated with the computing device. The additional information may comprise a device identifier, such as a permanent or temporary MAC address. The device identifier may be determined in communications from the computing device. If the device identifier is determined, then the one or more services may be enabled. Enabling the services may comprise enabling processing of communications associated with the computing device. The rules corresponding to the services may comprise rules for rejecting communications, rules for modifying communications, rules for sending notifications based on communications, rules for tracking metrics associated with the communications, a combination thereof, and/or the like.

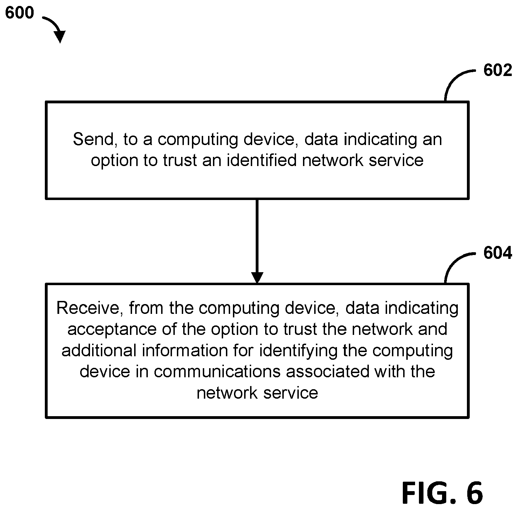

FIG. 6 shows a flowchart of an example method. The method 600 may comprise a computer implemented method for providing a service (e.g., a communication service, network service). A system and/or computing environment, such as the system 100 of FIG. 1, the devices of FIG. 2 (e.g., the client device 202, the network device 204), or the computing environment of FIG. 8, may be configured to perform the method 600. Any combination of steps, features, process and/or the like from FIGs. 1-5 and 7 may be combined with the steps, features, and/or process in FIG. 6.

At step 602, data indicating an option to trust an identified network service may be sent. The data indicating the option to trust may be sent to a computing device (e.g., user device 106, client device 202). The data indicating the option to trust may be sent from a network device (e.g., network device 104, network device 204). The data indicating an option to trust an identified network service (e.g., or network) may be sent in response to a request, such as a request for a network address as described further herein. Sending the data indicating the option to trust the identified network service may comprise sending the data indicating the option to trust and an association (e.g., assignment) of a network address and the computing device.

At step 604, data indicating acceptance of the option to trust the network and/or additional information may be received. The data indicating acceptance of the option to trust the network and/or additional information may be received from the computing device. The data indicating acceptance of the option to trust the network and/or additional information may be received by the network device. The additional information may comprise additional information for identifying the computing device in communications associated with the network service. The additional information may comprise additional information as described throughout the present disclosure and may include any information and/or may be processed in any manner as described elsewhere herein.

The additional information may comprise one or more of a temporary device identifier, a device identifier associated with an expiration time, a trust certificate, or a permanent device identifier. The additional information may comprise a randomized device identifier, a device identifier generated by the computing device, a device identifier associated specifically (e.g., or only) with a network and/or network service (e.g., not associated with other networks), a device identifier for communication with a trusted network (e.g., the network and/or network service), a device identifier for trusted communications with the network and/or network service, or a combination thereof.

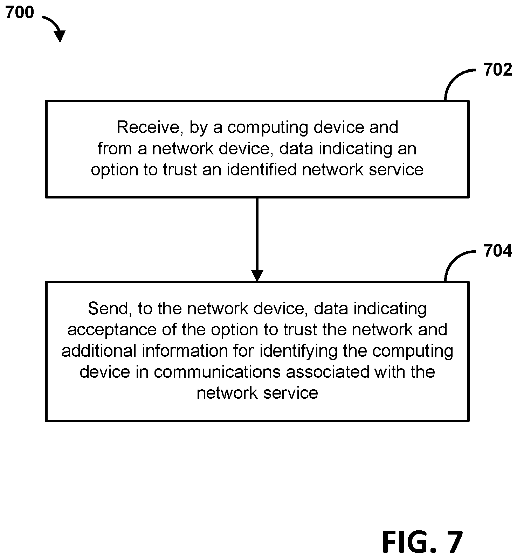

FIG. 7 shows a flowchart of an example method. The method 700 may comprise a computer implemented method for providing a service (e.g., a communication service, network service). A system and/or computing environment, such as the system 100 of FIG. 1, the devices of FIG. 2 (e.g., the client device 202, the network device 204), or the computing environment of FIG. 8, may be configured to perform the method 700. Any combination of steps, features, process and/or the like from FIGs. 1-6 may be combined with the steps, features, and/or process in FIG. 7.

At step 702, data indicating an option to trust an identified network service (e.g., or network) may be received. The data indicating the option to trust may be received by a computing device (e.g., user device 106, client device 202). The data indicating the option to trust may be received from a network device (e.g., network device 104, network device 204). Receiving the data indicating the option to the identified network service (e.g., or network) may be received as described elsewhere herein. Receiving the data indicating the option to the identified network service may be received in response to sending a request, such as a request for a network address as described further herein. Receiving the data indicating the option to trust the identified network service may comprise receiving the data indicating the option to trust and an association of a network address and the computing device.

At step 704, data indicating acceptance of the option to trust the network and/or additional information may be sent. The data indicating acceptance of the option to trust the network and/or additional information may be sent to the network device. The data indicating acceptance of the option to trust the network and/or additional information may be sent by the computing device. The additional information may comprise additional information for identifying the computing device in communications associated with the network service. The additional information may comprise additional information as described throughout the present disclosure and may include any information and/or may be processed in any manner as described elsewhere herein.

The additional information may comprise one or more of a temporary device identifier, a device identifier associated with an expiration time, a trust certificate, or a permanent device identifier. The additional information may comprise additional information as described elsewhere herein. The additional information may comprise a randomized device identifier, a device identifier generated by the computing device, a device identifier associated specifically (e.g., or only) with the network and/or network service (e.g., not associated with other networks), a device identifier for communication with a trusted network (e.g., the network, the network service), a device identifier for trusted communications with the network and/or network service, or a combination thereof.

FIG. 8 depicts a computing device that may be used in various aspects, such as the servers, modules, and/or devices depicted in FIGs. 1-2. With regard to the example architecture of FIG. 1, the content device 102, the network device 104, the user device 106, the services device 108 may each be implemented in an instance of a computing device 800 of FIG. 8. With regard to the example architecture of FIG. 2, the client device 202 and the network device 204 may each be implemented in an instance of a computing device 800 of FIG. 8. The computer architecture shown in FIG. 8 shows a conventional server computer, workstation, desktop computer, laptop, tablet, network appliance, PDA, e-reader, digital cellular phone, or other computing node, and may be utilized to execute any aspects of the computers described herein, such as to implement the methods described in relation to FIGs. 1-7.

The computing device 800 may include a baseboard, or "motherboard," which is a printed circuit board to which a multitude of components or devices may be connected by way of a system bus or other electrical communication paths. One or more central processing units (CPUs) 804 may operate in conjunction with a chipset 806. The CPU(s) 804 may be standard programmable processors that perform arithmetic and logical operations necessary for the operation of the computing device 800.

The CPU(s) 804 may perform the necessary operations by transitioning from one discrete physical state to the next through the manipulation of switching elements that differentiate between and change these states. Switching elements may generally include electronic circuits that maintain one of two binary states, such as flip-flops, and electronic circuits that provide an output state based on the logical combination of the states of one or more other switching elements, such as logic gates. These basic switching elements may be combined to create more complex logic circuits including registers, adders-subtractors, arithmetic logic units, floating-point units, and the like.

The CPU(s) 804 may be augmented with or replaced by other processing units, such as GPU(s) 805. The GPU(s) 805 may comprise processing units specialized for but not necessarily limited to highly parallel computations, such as graphics and other visualization-related processing.

A chipset 806 may provide an interface between the CPU(s) 804 and the remainder of the components and devices on the baseboard. The chipset 806 may provide an interface to a random access memory (RAM) 808 used as the main memory in the computing device 800. The chipset 806 may further provide an interface to a computer-readable storage medium, such as a read-only memory (ROM) 820 or non-volatile RAM (NVRAM) (not shown), for storing basic routines that may help to start up the computing device 800 and to transfer information between the various components and devices. ROM 820 or NVRAM may also store other software components necessary for the operation of the computing device 800 in accordance with the aspects described herein.

The computing device 800 may operate in a networked environment using logical connections to remote computing nodes and computer systems through local area network (LAN) 816. The chipset 806 may include functionality for providing network connectivity through a network interface controller (NIC) 822, such as a gigabit Ethernet adapter. A NIC 822 may be capable of connecting the computing device 800 to other computing nodes over a network 816. It should be appreciated that multiple NICs 822 may be present in the computing device 800, connecting the computing device to other types of networks and remote computer systems.

The computing device 800 may be connected to a mass storage device 828 that provides non-volatile storage for the computer. The mass storage device 828 may store system programs, application programs, other program modules, and data, which have been described in greater detail herein. The mass storage device 828 may be connected to the computing device 800 through a storage controller 824 connected to the chipset 806. The mass storage device 828 may consist of one or more physical storage units. A storage controller 824 may interface with the physical storage units through a serial attached SCSI (SAS) interface, a serial advanced technology attachment (SATA) interface, a fiber channel (FC) interface, or other type of interface for physically connecting and transferring data between computers and physical storage units.

The computing device 800 may store data on a mass storage device 828 by transforming the physical state of the physical storage units to reflect the information being stored. The specific transformation of a physical state may depend on various factors and on different implementations of this description. Examples of such factors may include, but are not limited to, the technology used to implement the physical storage units and whether the mass storage device 828 is characterized as primary or secondary storage and the like.

For example, the computing device 800 may store information to the mass storage device 828 by issuing instructions through a storage controller 824 to alter the magnetic characteristics of a particular location within a magnetic disk drive unit, the reflective or refractive characteristics of a particular location in an optical storage unit, or the electrical characteristics of a particular capacitor, transistor, or other discrete component in a solid-state storage unit. Other transformations of physical media are possible without departing from the scope of the present description, with the foregoing examples provided only to facilitate this description. The computing device 800 may further read information from the mass storage device 828 by detecting the physical states or characteristics of one or more particular locations within the physical storage units.

In addition to the mass storage device 828 described above, the computing device 800 may have access to other computer-readable storage media to store and retrieve information, such as program modules, data structures, or other data. It should be appreciated by those skilled in the art that computer-readable storage media may be any available media that provides for the storage of non-transitory data and that may be accessed by the computing device 800.

By way of example and not limitation, computer-readable storage media may include volatile and non-volatile, transitory computer-readable storage media and non-transitory computer-readable storage media, and removable and non-removable media implemented in any method or technology. Computer-readable storage media includes, but is not limited to, RAM, ROM, erasable programmable ROM ("EPROM"), electrically erasable programmable ROM ("EEPROM"), flash memory or other solid-state memory technology, compact disc ROM ("CD-ROM"), digital versatile disk ("DVD"), high definition DVD ("HD-DVD"), BLU-RAY, or other optical storage, magnetic cassettes, magnetic tape, magnetic disk storage, other magnetic storage devices, or any other medium that may be used to store the desired information in a non-transitory fashion.

A mass storage device, such as the mass storage device 828 depicted in FIG. 8, may store an operating system utilized to control the operation of the computing device 800. The operating system may comprise a version of the LINUX operating system. The operating system may comprise a version of the WINDOWS SERVER operating system from the MICROSOFT Corporation. According to further aspects, the operating system may comprise a version of the UNIX operating system. Various mobile phone operating systems, such as IOS and ANDROID, may also be utilized. It should be appreciated that other operating systems may also be utilized. The mass storage device 828 may store other system or application programs and data utilized by the computing device 800.

The mass storage device 828 or other computer-readable storage media may also be encoded with computer-executable instructions, which, when loaded into the computing device 800, transforms the computing device from a general-purpose computing system into a special-purpose computer capable of implementing the aspects described herein. These computer-executable instructions transform the computing device 800 by specifying how the CPU(s) 804 transition between states, as described above. The computing device 800 may have access to computer-readable storage media storing computer-executable instructions, which, when executed by the computing device 800, may perform the methods described in relation to FIGs. 1-7.

A computing device, such as the computing device 800 depicted in FIG. 8, may also include an input/output controller 832 for receiving and processing input from a number of input devices, such as a keyboard, a mouse, a touchpad, a touch screen, an electronic stylus, or other type of input device. Similarly, an input/output controller 832 may provide output to a display, such as a computer monitor, a flat-panel display, a digital projector, a printer, a plotter, or other type of output device. It will be appreciated that the computing device 800 may not include all of the components shown in FIG. 8, may include other components that are not explicitly shown in FIG. 8, or may utilize an architecture completely different than that shown in FIG. 8.

As described herein, a computing device may be a physical computing device, such as the computing device 800 of FIG. 8. A computing node may also include a virtual machine host process and one or more virtual machine instances. Computer-executable instructions may be executed by the physical hardware of a computing device indirectly through interpretation and/or execution of instructions stored and executed in the context of a virtual machine.

It is to be understood that the methods and systems are not limited to specific methods, specific components, or to particular implementations. It is also to be understood that the terminology used herein is for the purpose of describing particular embodiments only and is not intended to be limiting.

As used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint.

"Optional" or "optionally" means that the subsequently described event or circumstance may or may not occur, and that the description includes instances where said event or circumstance occurs and instances where it does not.

Throughout the description and claims of this specification, the word "comprise" and variations of the word, such as "comprising" and "comprises," means "including but not limited to," and is not intended to exclude, for example, other components, integers or steps. "Exemplary" means "an example of' and is not intended to convey an indication of a preferred or ideal embodiment. "Such as" is not used in a restrictive sense, but for explanatory purposes.

Components are described that may be used to perform the described methods and systems. When combinations, subsets, interactions, groups, etc., of these components are described, it is understood that while specific references to each of the various individual and collective combinations and permutations of these may not be explicitly described, each is specifically contemplated and described herein, for all methods and systems. This applies to all aspects of this application including, but not limited to, operations in described methods. Thus, if there are a variety of additional operations that may be performed it is understood that each of these additional operations may be performed with any specific embodiment or combination of embodiments of the described methods.

As will be appreciated by one skilled in the art, the methods and systems may take the form of an entirely hardware embodiment, an entirely software embodiment, or an embodiment combining software and hardware aspects. Furthermore, the methods and systems may take the form of a computer program product on a computer-readable storage medium having computer-readable program instructions (e.g., computer software) embodied in the storage medium. More particularly, the present methods and systems may take the form of web-implemented computer software. Any suitable computer-readable storage medium may be utilized including hard disks, CD-ROMs, optical storage devices, or magnetic storage devices.

Embodiments of the methods and systems are described herein with reference to block diagrams and flowchart illustrations of methods, systems, apparatuses and computer program products. It will be understood that each block of the block diagrams and flowchart illustrations, and combinations of blocks in the block diagrams and flowchart illustrations, respectively, may be implemented by computer program instructions. These computer program instructions may be loaded on a general-purpose computer, special-purpose computer, or other programmable data processing apparatus to produce a machine, such that the instructions which execute on the computer or other programmable data processing apparatus create a means for implementing the functions specified in the flowchart block or blocks.

These computer program instructions may also be stored in a computer-readable memory that may direct a computer or other programmable data processing apparatus to function in a particular manner, such that the instructions stored in the computer-readable memory produce an article of manufacture including computer-readable instructions for implementing the function specified in the flowchart block or blocks. The computer program instructions may also be loaded onto a computer or other programmable data processing apparatus to cause a series of operational steps to be performed on the computer or other programmable apparatus to produce a computer-implemented process such that the instructions that execute on the computer or other programmable apparatus provide steps for implementing the functions specified in the flowchart block or blocks.

The various features and processes described above may be used independently of one another, or may be combined in various ways. All possible combinations and sub-combinations are intended to fall within the scope of this disclosure. In addition, certain methods or process blocks may be omitted in some implementations. The methods and processes described herein are also not limited to any particular sequence, and the blocks or states relating thereto may be performed in other sequences that are appropriate. For example, described blocks or states may be performed in an order other than that specifically described, or multiple blocks or states may be combined in a single block or state. The example blocks or states may be performed in serial, in parallel, or in some other manner. Blocks or states may be added to or removed from the described example embodiments. The example systems and components described herein may be configured differently than described. For example, elements may be added to, removed from, or rearranged compared to the described example embodiments.

It will also be appreciated that various items are illustrated as being stored in memory or on storage while being used, and that these items or portions thereof may be transferred between memory and other storage devices for purposes of memory management and data integrity. Alternatively, in other embodiments, some or all of the software modules and/or systems may execute in memory on another device and communicate with the illustrated computing systems via inter-computer communication. Furthermore, in some embodiments, some or all of the systems and/or modules may be implemented or provided in other ways, such as at least partially in firmware and/or hardware, including, but not limited to, one or more application-specific integrated circuits ("ASICs"), standard integrated circuits, controllers (e.g., by executing appropriate instructions, and including microcontrollers and/or embedded controllers), field-programmable gate arrays ("FPGAs"), complex programmable logic devices ("CPLDs"), etc. Some or all of the modules, systems, and data structures may also be stored (e.g., as software instructions or structured data) on a computer-readable medium, such as a hard disk, a memory, a network, or a portable media article to be read by an appropriate device or via an appropriate connection. The systems, modules, and data structures may also be transmitted as generated data signals (e.g., as part of a carrier wave or other analog or digital propagated signal) on a variety of computer-readable transmission media, including wireless-based and wired/cable-based media, and may take a variety of forms (e.g., as part of a single or multiplexed analog signal, or as multiple discrete digital packets or frames). Such computer program products may also take other forms in other embodiments. Accordingly, the present invention may be practiced with other computer system configurations.

While the methods and systems have been described in connection with preferred embodiments and specific examples, it is not intended that the scope be limited to the particular embodiments set forth, as the embodiments herein are intended in all respects to be illustrative rather than restrictive.

It will be apparent to those skilled in the art that various modifications and variations may be made without departing from the scope of the present disclosure. Other embodiments will be apparent to those skilled in the art from consideration of the specification and practices described herein. It is intended that the specification and example figures be considered as exemplary only, with a scope being indicated by the appended claims.

Here follows a list of clauses highlighting aspects of the disclosure.
Clause 1: A method comprising:
   receiving, from a computing device, a first message comprising a temporary device identifier associated with the computing device and a request for a network address to communicate with a network;
   sending, to the computing device and based on the request, a second message comprising the network address, identity information associated with the network, and data indicating an option to trust the network; and
   receiving, from the computing device and based on the second message, a third message comprising data indicating acceptance of the option to trust the network and comprising additional information for identifying the computing device in communications associated with the trust of the network.
Clause 2: The method of any preceding clause, e.g. clause 1, wherein the additional information comprises one or more of an additional device identifier, a device identifier associated with an expiration time, a trust certificate, or a permanent device identifier.
Clause 3: The method of any preceding clause, e.g. clause 1, wherein the temporary device identifier is at least one of a randomized device identifier, a device identifier generated by the computing device, a device identifier specific to the network, or a device identifier for communication with an untrusted network.
Clause 4: The method of any preceding clause, e.g. clause 1, wherein the computing device is configured to associate different device identifiers with different identity information corresponding to one or more different networks, service entities, or network devices.
Clause 5: The method of any preceding clause, e.g. clause 1, wherein the temporary device identifier comprises a media access control address and the request comprises a Dynamic Host Configuration Protocol request.
Clause 6: The method of any preceding clause, e.g. clause 1, wherein the second message comprises data indicating one or more services available to the computing device if the option to trust is accepted, and further comprising facilitating, based on the data indicating the acceptance of the option to trust, the one or more services.
Clause 7: The method of any preceding clause, e.g. clause 1, wherein the identity information comprises a digital certificate associated with at least one of the network, a network service associated with the network, or a service entity associated with the network.
Clause 8: A method, performed alone or in combination with the method of any of the preceding clauses, the method comprising comprising:
   sending, by a computing device, a first message comprising a temporary device identifier associated with the computing device and a request for a network address to communicate with a network;
   receiving, from a network device and based on the request, a second message comprising the network address, identity information associated with the network, and data indicating an option to trust the network; and
   sending, to the network device and based on the second message, a third message comprising data indicating acceptance of the option to trust the network and comprising additional information for identifying the computing device in communications associated with the trust of the network.
Clause 9: The method of any preceding clause, e.g. clause 8, further comprising determining, based on a data store of the computing device, an association between the identity information and the additional information, wherein the additional information is added to the third message based on determining the association.
Clause 10: The method of any preceding clause, e.g. clause 8, further comprising:
   determining that the identity information is not stored by the computing device; and
   generating, based on determining that the identity information is not stored by the computing device, the additional information.
Clause 11: The method of any preceding clause, e.g. clause 8, wherein the additional information comprises one or more of an additional device identifier, a device identifier associated with an expiration time, a trust certificate, or a permanent device identifier.
Clause 12: The method of any preceding clause, e.g. clause 8, wherein the temporary device identifier is at least one of a randomized device identifier, a device identifier generated by the computing device, a device identifier specific to the network, or a device identifier for communication with an untrusted network.
Clause 13: The method of any preceding clause, e.g. clause 8, further comprising storing an association of the temporary device identifier with the network, wherein the computing device is configured to store associations of different device identifiers with different identity information corresponding to one or more different networks, service entities, or network devices.
Clause 14: The method of any preceding clause, e.g. clause 8, wherein the temporary device identifier comprises a media access control address and the request comprises a Dynamic Host Configuration Protocol request.
Clause 15: A method, performed alone or in combination with the method of any of the preceding clauses, the method comprising:
   receiving, from a computing device, a first message comprising a temporary device identifier associated with the computing device and a request for a network address to communicate with a network;
   determining, based on at least one of the temporary device identifier or additional information received from the computing device, that the computing device is associated with acceptance of a trust option; and
   facilitating, for the computing device, one or more services associated with acceptance of the trust option.
Clause 16: The method of any preceding clause, e.g. clause 15, wherein the one or more services comprises at least one of a quality of service enforcement service, a parental control service, a content filtering service, a corporate network service, a private network service, a guest network service, or a gaming service.
Clause 17: The method of any preceding clause, e.g. clause 15, wherein facilitating the one or more services comprises processing, based on rules corresponding to the one or more services, communications associated with the computing device.
Clause 18: The method of any preceding clause, e.g. clause 15, wherein determining that the computing device is associated with acceptance of a trust option comprises at least one of: determining that a message from the computing device indicates acceptance of the trust option, determining that the temporary device identifier was previously associated with the trust option, or determining that an expiration time associated with the trust option has not passed.
Clause 19: The method of any preceding clause, e.g. clause 15, wherein the additional information comprises one or more of an additional device identifier, a device identifier associated with an expiration time, a trust certificate, or a permanent device identifier.
Clause 20: The method of any preceding clause, e.g. clause 15, wherein the temporary device identifier is at least one of a randomized device identifier, a device identifier generated by the computing device, a device identifier specific to the network, or a device identifier for communication with an untrusted network.
Clause 21: A method or system for managing communication in a network, wherein a computing device sends a request to a network device for network address. The request comprises a temporary device identifier associated with the computing device. The network device sends data indicating an option to trust the network device. If the computing device indicates acceptance of the option to trust the network device, additional information is sent to the network device to allow identification of the computing device from one session to another.
Clause 22: One or more (non-transitory) computer-readable media storing instructions that, when executed by one or more processors, cause a device to perform the method according to any of the preceding clauses.
Claus 23: A device or system configured to perform the method according to any of the preceding clauses and/or storing computer-readable media storing instructions according to the preceding clause.

The claims follow hereafter.

## Claims

1. A method comprising:
receiving, from a computing device, a first message comprising a temporary device identifier associated with the computing device and a request for a network address to communicate with a network;
sending, to the computing device and based on the request, a second message comprising the network address, identity information associated with the network, and data indicating an option to trust the network; and
receiving, from the computing device and based on the second message, a third message comprising data indicating acceptance of the option to trust the network and comprising additional information for identifying the computing device in communications associated with the trust of the network.

2. The method of claim 1, wherein the additional information comprises one or more of an additional device identifier, a device identifier associated with an expiration time, a trust certificate, or a permanent device identifier.

3. The method of any one of the preceding claims, wherein the temporary device identifier is at least one of a randomized device identifier, a device identifier generated by the computing device, a device identifier specific to the network, or a device identifier for communication with an untrusted network.

4. The method of any one of the preceding claims, wherein the computing device is configured to associate different device identifiers with different identity information corresponding to one or more different networks, service entities, or network devices.

5. The method of any one of the preceding claims, wherein the temporary device identifier comprises a media access control address and the request comprises a Dynamic Host Configuration Protocol request.

6. The method of any one of the preceding claims, wherein the second message comprises data indicating one or more services available to the computing device if the option to trust is accepted.

7. The method of any one of the preceding claims, wherein the identity information comprises a digital certificate associated with at least one of the network, a network service associated with the network, or a service entity associated with the network.

8. The method of any one of the preceding claims, wherein the network address comprises at least one of an internet protocol address, an internet protocol version 4 address, or an internet protocol version 6 address.

9. The method of any one of the preceding claims, wherein the computing device is configured to:
determine that the identity information is not stored by the computing device; and
generate, based on determining that the identity information is not stored by the computing device, the additional information.

10. The method of any one of the preceding claims, further comprising:
determining, based on at least one of the temporary device identifier or the additional information received from the computing device, that the computing device is associated with acceptance of the option to trust; and
facilitating, for the computing device, one or more services associated with acceptance of the option to trust.

11. The method of the preceding claim, wherein the one or more services comprises at least one of a quality of service enforcement service, a parental control service, a content filtering service, a corporate network service, a private network service, a guest network service, or a gaming service.

12. The method of any one of the two preceding claims, wherein facilitating the one or more services comprises processing, based on rules corresponding to the one or more services, communications associated with the computing device.

13. A device comprising:
one or more processors; and
a memory storing instructions that, when executed by the one or more processors, cause the device to perform the methods of any one of claims 1-12.

14. A non-transitory computer-readable medium storing instructions that, when executed by one or more processors, cause a device to perform the methods of any one of claims 1-12.

15. A system comprising:
a computing device; and
a network device comprising one or more processors and a memory, wherein the memory stores instructions that, when executed by the one or more processors, cause the network device to perform the methods of any one of claims 1-12.
